Europäisches Patentamt

**European Patent Office**

**Office européen des brevets**

(11) Publication number: **0 363 914**
A2

# EUROPEAN PATENT APPLICATION

(21) Application number: 89118833.6

(22) Date of filing: 10.10.89

(51) Int. Cl.5: **G02B 27/28 , G02B 5/30 , G02B 1/00 , G02F 1/09**

(30) Priority: 13.10.88 JP 258603/88
13.10.88 JP 258604/88

(43) Date of publication of application:
18.04.90 Bulletin 90/16

(84) Designated Contracting States:
DE FR GB IT NL

(71) Applicant: NEC CORPORATION
33-1, Shiba 5-chome, Minato-ku
Tokyo 108(JP)

(72) Inventor: Saito, Seiichi c/o NEC Corporation
33-1, Shiba 5-chome Minato-ku
Tokyo(JP)
Inventor: Kuwano, Yasuhiko c/o NEC
Corporation
33-1, Shiba 5-chome Minato-ku
Tokyo(JP)

(74) Representative: Pätzold, Herbert, Dr.
Steubstrasse 10
D-8032 Gräfelfing-München(DE)

(54) Optical device with optical polarizer/analyzer formed of yttrium vanadate.

(57) An optical polarizer/analyzer (41/42) incorporated in an optical device is formed of an yttrium vanadate represented by the molecular formula of $YVO_4$, the yttrium vanadate is as large in differential refractive index between an ordinary ray and an extraordinary ray and in optical absorption characteristics as rutile but is smaller in insertion loss than rutile in the long wavelength band, and the yttrium vanadate is easy for producing a rod with a large diameter, so that the optical polarizer/analyzer of the yttrium vanadate is suitable for the component element of an optical device.

FIG.4

## OPTICAL DEVICE WITH OPTICAL POLARIZER/ANALYZER FORMED OF YTTRIUM VANADATE

### FIELD OF THE INVENTION

This invention relates to an optical polarizer/analyzer incorporated in an optical device such as, for example, an optical isolator and, more particularly, to a material used for formation of the optical polarizer/analyzer.

### DESCRIPTION OF THE RELATED ART

Various kinds of optical device are incorporated in an optical fiber transmission system, and optical isolators are provided in association with some of the optical devices for preventing the optical device from reflections of the optical radiations.

The optical isolator has a structure where a Faraday element is sandwiched between an optical polarizer and an optical analyzer and encircled with a permanent magnet. The optical polarizer/analyzer and the Faraday element are formed of single crystal rutile (represented by the molecular formula of $TiO_2$) and bismuth garnet, respectively, and rutile wafers and a bismuth garnet wafer are firstly prepared in the fabrication process. Subsequently, the rutile wafers are fixed to both surfaces of the bismuth garnet wafer, respectively, and the multi-wafer structure thus formed is cut into a plurality of chips. The chips are fallen within a range between 1 millimeter by 1 millimeter and several millimeters by several millimeters, and provide essential parts of the optical isolators.

However, a problem is encountered in the prior art fabrication process in the productivity as well as the production yield. In detail, the rutile wafer is sliced from a rutile bulk, and the rutile bulk is artificially produced. For growing the rutile crystal, the Verneuil method and the floating zone method are well known in the art, however, the rutile rod produced through each method ranges from about 12 millimeters to about 15 millimeters in the diameter. In general, the maximum diameter is dominated by the weight of the molten rutile as well as the surface tension, and these factors restrict the rutile rod in the above range. On the other hand, a large bismuth garnet wafer is industrially available, and the bismuth garnet wafer of about 35 millimeters to about 50 millimeters in the diameter are obtainable. However, such a large bismuth garnet wafer can not be necessary for production of the optical isolator because of the small calcite wafer, and the small bismuth garnet wafer gives rise to deteriorate the productivity of the optical isolator.

Moreover, various defects are liable to take place in the calcite crystal, and the poor quality results in deterioration in the production yield of the optical isolator. The poor productivity and the low production yield give rise to increase the production cost, and, accordingly, the prior art optical isolator is fairly expensive.

Natural calcite is alternatively used for formation of the polarizer/analyzer, however, high quality natural calcite is not so much as the industrial demand. Moreover, most of the calcite ore is too small to fabricate a large device, and calcite is not chemically stable. When the chemically unstable calcite is used for the polarizer/analyer, the polarizer/analyzer tends to be degraded, and, accordingly, the optical isolator is deteriorated in characteristics after a relatively short duration. For these reasons, the calcite is not desirable for industrial fabrication of the optical isolator.

### SUMMARY OF THE INVENTION

It is therefore an important object of the present invention to provide an optical device which is easy for fabrication.

It is also an important object of the present invention to provide an optical device which is relatively low in the production cost.

To accomplish these objects, the present invention proposes to form an optical polarizer of an yttrium vanadate .

In accordance with one aspect of the present invention, there is provided an optical device comprising an optical polarizer formed of an yttrium vanadate represented by the molecular formula of $YVO_4$.

In accordance with another aspect of the present invention, there is provided an optical device serving as an optical isola tor, comprising a Faraday element operative to cause a plane of polarizing to rotate over a predetermined angle and sandwiched between an optical polarizer and an optical analyzer, and a magnet provided in association with the Faraday element, in which the optical polarizer and the optical analyzer are formed of an yttrium vanadate represented by the molecular formula of $YVO_4$.

### BRIEF DESCRIPTION OF THE DRAWINGS

The features and advantages of an optical device according to the present invention will be more clearly understood from the following description taken in conjunction with the accompanying drawings in which:

Fig. 1 is a perspective view showing an optical polarizer embodying the present invention;

Fig. 2 is a plan view showing the optical polarizer shown in Fig. 1;

Fig. 3 is an optical device provided with the optical polarizers each shown in Fig. 1 and serving as an optical polarizing prism;

Fig. 4 is a partially cut-away perspective view showing the structure of an optical isolator embodying the present invention; and

Fig. 5 is a side view showing an yttrium vanadate rod for producing an yttrium vanadate wafer used in a fabricating process of an optical polarizer/analyzer according to the present invention.

## DESCRIPTION OF THE PREFERRED EMBODIMENTS

### First embodiment

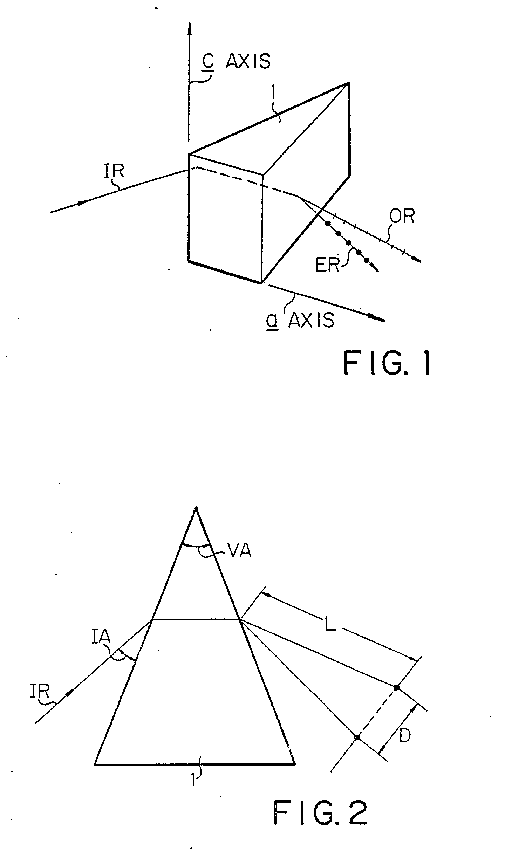

Referring first Figs. 1 and 2 of the drawings, an optical polarizer according to the present invention is formed of a single crystal yttrium vanadate represented by the molecular formula of $YVO_4$, and is shaped into a trigonal prism. The trigonal prism is arranged in such a manner that the crossing two side lines of the bottom plane are aligned to the a and c axes of the crystal structure of the yttrium vanadate, and the vertical angle VA of the trigonal prism is selected to be about 30 degrees. The optical polarizer thus formed serves as an optical separator or a prism 1.

The optical polarizer shown in Fig. 1 is made from a single crystal yttrium vanadate bulk which is grown through a pulling method proposed by the inventors of the present invention in Japanese Patent Application No. 63-69325. The single crystal yttrium vanadate thus grown is in the single axis tetragonal system, and a difference in refractive index between an ordinary ray and an extraordinary ray is maximized in a direction parallel to the a axis of the crystal structure. According to measurements carried out by the inventors, the difference between the ordinary ray and the extraordinary ray is equal to or greater than about 0.2 in the range from the visual region to the infrared region. The extraordinary ray is polarized to the c axis of the crystal structure, and the ordinary ray has a linear polarizing characteristics substantially in perpendicular with respect to the extraordinary ray. Moreover, the yttrium vanadate is easily shaped into various configurations, and, is chemically stable. For this reason, the yttrium vanadate is suitable for providing a component element of an optical device.

When an optical radiation IR is obliquely fallen onto a side plane of the prism 1, the optical radiation is separated into an ordinary ray OR and an extraordinary ray ER during passing through the prism 1. In accordance with the polarizing characteristics of the yttrium vanadate described hereinbefore, the extraordinary ray ER is polarized to the c axis of the crystal structure, and the ordinary ray OR is of the ray polarized in a perpendicular direction to the extraordinary ray ER. Assuming now that the incident angle IA of the optical radiation is about 60 degrees for allowing the ray to be propagated along the a axis, the separated distance D is about 2 centimeters at the measured points spaced from the prism 1 by about $L = 10$ centimeters. Thus, the rays are widely separated, and the prism 1 is valuable for the optical device.

### Second embodiment

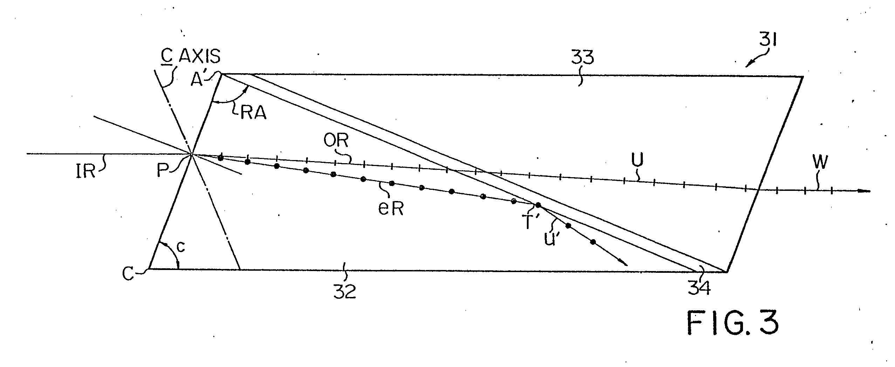

Turning to Fig. 3 of the drawings, a polarizing prism 31 embodying the present invention comprises two prisms 32 and 33 formed of the yttrium vanadate ($YVO_4$), and a thin film 34 of a Canada balsam sandwiched between the two prisms 32 and 33. Each of the prisms 32 and 33 has right angles RA, and an angle C is about 70 degrees.

The polarizing prism 31 is arranged in such a manner that the c axis of the crystal structure is intersected by line CA' at about 30 degrees. When a non-polarized incident ray IR is fallen onto the point P of the prism 2, the incident ray IR is polarized in the prism 2, and, accordingly, an ordinary ray OR and an extraordinary ray ER takes place. The extraordinary ray ER is totally reflected at point T' of the thin films 34, and proceeds in a direction indicated by U'. On the other hand, the ordinary ray OR is incident at point T of the thin film 34, and, then, passes through the thin film 34. The ordinary ray OR further proceeds to a direction indicated by U, and is left from the prism 33 as indicated by W.

### Third embodiment

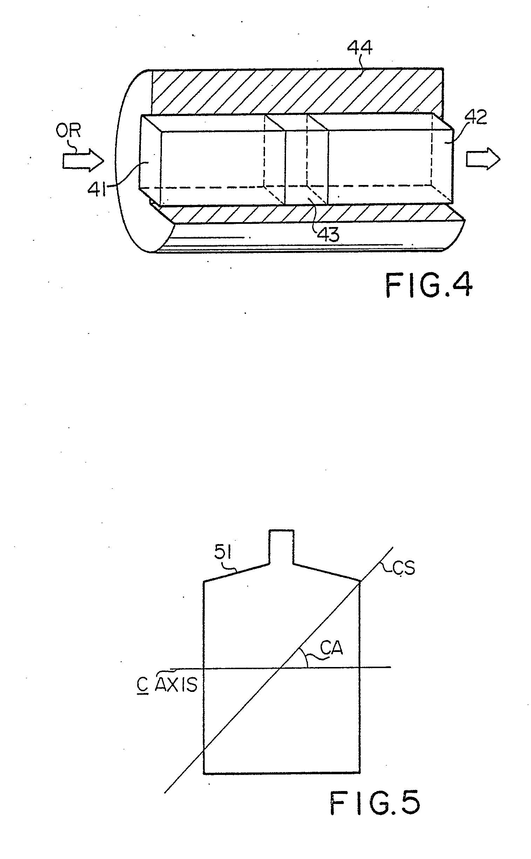

Turning to Fig. 4, an optical isolator embodying the present invention largely comprises an optical polarizer 41 formed of an yttrium vanadate, an optical analyzer 42 formed of the yttrium vanadate, a Faraday element 43 of bismuth garnet sandwiched between the optical polarizer 41 and the optical analyzer 42, and a magnet 44 shaped into a tube configuration where the optical polarizer 41, the optical analyzer 42 and the Faraday element 43 are accommodated. In this instance, each of the optical polarizer 41 and the optical analyzer 42 is shaped into a cube of 1.2 millimeter, and the Faraday element is about 0.22 millimeter in thickness. The Faraday element 43 cause the plane of polarization to rotate over 45 degrees, however, is well known in the art, so that no further description is incorporated.

When an optical radiation OR is fallen into the optical isolator, the incident ray passes through the optical isolator, however, undesirable reflections can not proceeds in the opposite direction to the optical radiation. According to experimental results, the yttrium vanadate used for the optical polarizer 41 and the optical analyzer 42 is as in differential refractive index between an ordinary ray and an extraordinary ray as rutile, and is measured to be about 0.207 at 1.1 micron wavelength. The insertion loss is about 0.29 dB at 1.3 micron wavelength which is smaller than the insertion loss of rutile. The insertion loss of rutile is about 0.52 dB at 1.3 micron wavelength. The isolation of the yttrium vanadate is as large as rutile, and is measured to be about 36 dB. The yttrium vanadate crystal is considered to be not less than about 40 dB in isolation, however, the measuring system used is unfortunately responsible to such a large value.

Description is hereinunder made for a process of fabricating the optical isolator. The process starts with preparing a pulling system associated with a high frequency induction heating unit (not shown). A crucible made of Iridium is about 50 millimeters in diameter, about 50 millimeters in depth and about 1.5 millimeter in thickness, and is filled with 500 grams of the yttrium vanadate ($YVO_4$) powder. The powder is heated for melting, and a small seed crystal with the c axis orientation is dipped into the molten yttrium vanadate. The seed crystal is lifted at about 2 to 3 millimeters per hour, and the molten yttrium vanadate is decreased in temperature at about 20 to 25 degrees in centigrade per hour. After about 10 hours, an yttrium vanadate bulk 51 thus grown is separated from the molten yttrium vanadate, and is, then, gradually cooled at about 50 to 70 degrees in centigrade until the crucible reaches about 800 degrees in centigrade. Then, the yttrium vanadate is cooled to the room temperature. The yttrium vanadate bulk 51 thus grown is about 25 millimeters in diameter and about 35 millimeters in length.

The yttrium vanadate bulk 51 is fixed to a slicer (not shown), and is sliced along a cutting surface CS. The cutting angle CA is inclined from the c axis of the crystal toward the a axis of the crystal by about 43 degrees. The cutting angle is varied to produce various kinds of wafer, and each of the wafers is about 1.3 to 1.4 millimeters in thickness. The wafers are polished to have final thicknesses of about 1.2 millimeter, and the optical properties are, then, evaluated. As the results of the evaluation, it is desirable for the optical polarizer/analyzer that the cutting angle CA ranges from 43 degrees to 53 degrees.

The yttrium vanadate wafers thus produced are covered at both sides thereof with anti-reflection films for 1.3 micron wavelength, respectively. A bismuth garnet film is sandwiched between the two yttrium vanadate wafers, and the multiple layer structure thus formed are cut into a large number of chips. These chips provide essential component elements of the optical isolators. After the completion of the fabricating process, the optical isolator is evaluated in view of the isolation and the insertion loss, and the measured values are described hereinbefore.

In this instance, the crucible used in the process is about 50 millimeters in diameter. However, when a larger crucible is used, a larger bulk is grown, and, accordingly, a large wafer is produced from the larger bulk.

As will be understood from the foregoing description, the yttrium vanadate is grown to a large bulk, and, for this reason, the optical isolator with the optical polarizer/analyzer of the yttrium vanadate is easy for producing and, accordingly, improved in productivity. This results in reduction in production cost. Since the yttrium vanadate is high in quality, the production yield is increased. Furthermore, the yttrium vanadate is chemically stable, so that optical device with the polarizer of the yttrium vanadate is prolonged in service time period.

Although particular embodiments of the present invention have been shown and described, it will be obvious to those skilled in the art that various changes and modifications may be made without departing from the spirit and scope of the present invention.

**Claims**

1. An optical device comprising an optical polarizer, characterized in that said optical polarizer is formed of an yttrium vanadate represented by the molecular formula of $YVO_4$.

C AXIS

1

IR

OR

ER

a AXIS

FIG. 1

VA

IA

IR

L

D

1

FIG. 2

FIG. 3

EP 0 363 914 A2

FIG.4

FIG.5